# EUROPEAN PATENT SPECIFICATION

(11) **EP 4 303 054 B1**
(45) Date of publication and mention of the grant of the patent: **02.12.2026**
(21) Application number: 23181689.3
(22) Date of filing: 27.06.2023
(51) Int. Cl.: B60K 15/03, B60K 15/073

(54) **IN-VEHICLE LIQUID HYDROGEN TANK AND A METHOD FOR MANUFACTURING THE SAME**
FLÜSSIGWASSERSTOFFTANK IN EINEM FAHRZEUG UND VERFAHREN ZUR HERSTELLUNG DAVON
RÉSERVOIR D'HYDROGÈNE LIQUIDE EMBARQUÉ ET SON PROCÉDÉ DE FABRICATION

(30) Priority: 04.07.2022 JP 2022107641
(43) Date of publication of application: 10.01.2024
(73) Proprietor: TOYOTA JIDOSHA KABUSHIKI KAISHA, Toyota-shi, Aichi-ken, 471 8571 (JP)
(72) Inventor: ITO, Naoaki, Toyota-shi, 471-8571 (JP)
(74) Representative: J A Kemp LLP

(56) References cited:
- US-A1- 2004 195 246
- US-A1- 2015 060 466
- US-B2- 8 919 597

## Description

### TECHNICAL FIELD

The present specification discloses an in-vehicle liquid hydrogen tank that stores liquid hydrogen, and a method for manufacturing the in-vehicle liquid hydrogen tank.

### BACKGROUND

Conventionally, an in-vehicle liquid hydrogen tank that stores hydrogen in a liquid state as is has been known. For example, the following technique is disclosed in PATENT DOCUMENT 1. A metallic inner tank is arranged inside an outer tank that is made of a reinforced fiber material, and liquid hydrogen is stored in this inner tank. In PATENT DOCUMENT 1, a vacuum heat-insulation layer is formed between the outer tank and the inner tank. In addition, a shock-absorbing material is partially arranged between the outer tank and the inner tank, and inside the outer tank, the inner tank is suspended and held by the shock-absorbing material. According to such an in-vehicle liquid hydrogen tank, heat transfer to the inner tank is inhibited by the vacuum heat-insulation layer. Thus, it is possible to keep the inside of the inner tank at low temperature and thus to suppress vaporization of liquid hydrogen.

However, in the configuration disclosed in PATENT DOCUMENT 1, the inner tank is suspended and held by the shock-absorbing material that is partially arranged. In this case, when a strong impact is applied to the in-vehicle liquid hydrogen tank, the shock-absorbing material is possibly damaged or deformed, causing the inner tank to collide with the outer tank. As a result, the inner tank is possibly deteriorated or damaged. In the case where the inner tank is deteriorated or damaged, various problems such as leakage of hydrogen possibly occur.

US 2004/195246 A1, US 2015/060466 A1, and US 8 919 597 B2 disclose further background art to the invention.

In view of the above, the present specification discloses an in-vehicle liquid hydrogen tank capable of storing liquid hydrogen further stably, and a method for manufacturing the in-vehicle liquid hydrogen tank.

### CITATION LIST

PATENT DOCUMENT 1: JP 2018-066426 A

### SUMMARY

An in-vehicle liquid hydrogen tank disclosed in the present specification includes: an inner tank that stores liquid hydrogen; an outer tank that accommodates the inner tank; and a heat-insulation material that is disposed in a heat-insulation clearance as a clearance between the inner tank and the outer tank and holds the inner tank to be separated from an inner surface of the outer tank. The heat-insulation clearance has: a vacuum area that is not filled with the heat-insulation material; and an area that is filled with the heat-insulation material and thus allows the inner tank to be surface-supported by the heat-insulation material.

In the vacuum area, heat is not transferred except by radiation. For this reason, it is possible to keep a heat-insulation property of the inner tank high by providing the vacuum area. Meanwhile, in the case where only the vacuum area is provided, the inner tank possibly collides with the outer tank during a collision of a vehicle. However, as described above, such an area is provided where the heat-insulation clearance is filled with the heat-insulation material, so as to allow the inner tank to be surface-supported by the heat-insulation material. In this way, it is possible to prevent such a collision of the inner tank with the outer tank. In other words, with the above configuration, it is possible to prevent the collision of the inner tank with the outer tank during the collision of the vehicle while maintaining the high heat-insulation property. In this way, it is possible to effectively prevent deformation and damage to the inner tank. Therefore, liquid hydrogen can be stored further stably.

In this case, the heat-insulation material may include superinsulation that is formed by stacking one or more heat shield layers, each of which is made of a metal sheet, and one or more spacer layers, each of which is made of a fiber material, and the heat-insulation clearance may be vacuum-suctioned in a state where the heat-insulation material is arranged therein.

It is possible to further effectively prevent a temperature increase of liquid hydrogen by using the superinsulation.

In addition, the heat-insulation material may be accommodated in a sealed bag, and both the inside of the sealed bag and the heat-insulation clearance may be vacuum-suctioned.

With such a configuration, it is possible to simplify manufacture of the liquid hydrogen tank.

The outer tank may have a rupture disc that is ruptured when an internal pressure of the outer tank becomes equal to or higher than a specified allowable pressure, so as to expose the inside of the outer tank to atmospheric air.

With such a configuration, it is possible to prevent an excess increase in the internal pressure of the outer tank and thus to improve safety of the liquid hydrogen tank.

The inner tank may be shaped to have a flat surface section.

Since the heat-insulation material is arranged in the clearance between the outer tank and the inner tank, an internal pressure of the inner tank is dispersed to the outer tank and the heat-insulation material, and a maximum allowable pressure of the inner tank is thereby improved. In addition, even when the inner tank is deformed, the inner tank does not directly contact the outer tank. Thus, the heat-insulation property is maintained. Therefore, the inner tank can be shaped to have the flat surface section.

A booster pump is further provided to pressurize liquid hydrogen stored in the inner tank and to output pressurized liquid hydrogen to the outside. A bottom portion of the inner tank is formed with a collector section which is depressed downward and in which a lower end of the booster pump is inserted.

With such a configuration, it is possible to suppress a pressure of stored liquid hydrogen to a low value, and it is also possible to suppress the maximum allowable pressure required for the inner tank to a low value. In this way, it is possible to reduce cost and weight related to the hydrogen tank.

A method for manufacturing an in-vehicle liquid hydrogen tank disclosed in the present specification includes: accommodating a heat-insulation material, which includes a fiber material, in a sealed bag and then vacuum-suctioning the inside of the sealed bag; and arranging, inside an outer tank, an inner tank that stores liquid hydrogen, arranging the sealed bag in a heat-insulation clearance as a clearance between the inner tank and the outer tank, and thereafter vacuum-suctioning the heat-insulation clearance.

The heat-insulation material is compressed by vacuum-suctioning the sealed bag in advance. Thus, the heat-insulation material can easily be arranged in the clearance between the outer tank and the inner tank. In addition, the heat-insulation clearance is vacuum-suctioned after the heat-insulation material is arranged therein. In this case, a differential pressure between the inside and the outside of the sealed bag is reduced, the heat-insulation material expands, and thus the clearance can be filled with the heat-insulation material. In other words, with the above configuration, it is possible to easily manufacture the liquid hydrogen tank that can store liquid hydrogen further stably.

According to the technique disclosed in the present specification, liquid hydrogen can be stored further stably.

### BRIEF DESCRIPTION OF DRAWINGS

Embodiment(s) of the present disclosure will be described based on the following figures, wherein:
FIG. 1 is a perspective view of an in-vehicle liquid hydrogen tank;
FIG. 2 is a cross-sectional view of the in-vehicle liquid hydrogen tank;
FIG. 3 is a schematic view illustrating a condition of the in-vehicle liquid hydrogen tank during a collision;
FIG. 4 is a schematic view illustrating the condition of the in-vehicle liquid hydrogen tank during manufacture;
FIG. 5A is a schematic view illustrating a condition of a heat-insulation material before a heat-insulation clearance is vacuum-suctioned;
FIG. 5B is a schematic view illustrating the condition of the heat-insulation material after the heat-insulation clearance is vacuum-suctioned;
FIG. 6 is a flowchart illustrating a manufacturing flow of the in-vehicle liquid hydrogen tank;
FIG. 7 is a schematic view illustrating another example of the in-vehicle liquid hydrogen tank;
FIG. 8 is a schematic view illustrating an in-vehicle liquid hydrogen tank in a comparative example; and
FIG. 9 is a schematic view illustrating a condition of the in-vehicle liquid hydrogen tank in the comparative example during a collision.

### DESCRIPTION OF EMBODIMENTS

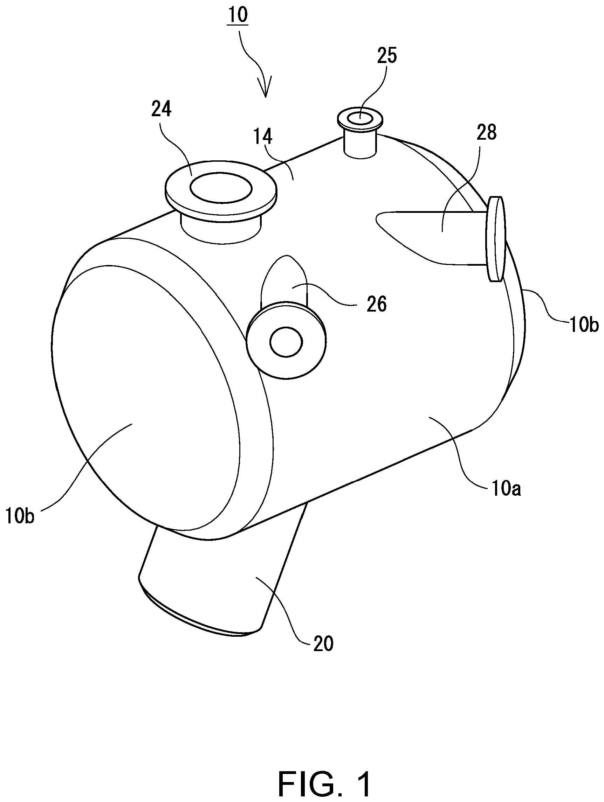

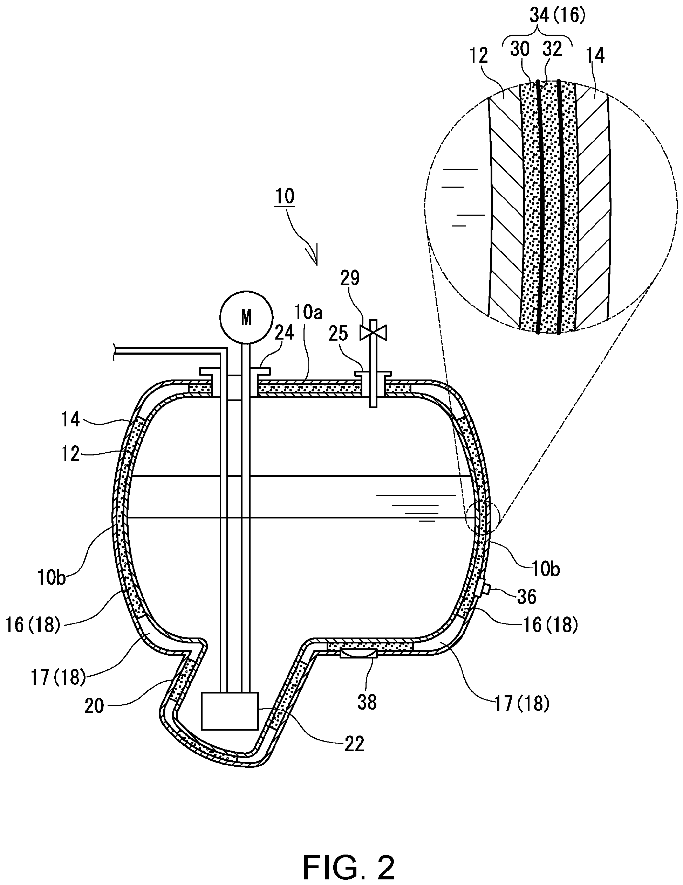

A description will hereinafter be made on a liquid hydrogen tank 10 (hereinafter referred to as a "hydrogen tank 10") with reference to the drawings. FIG. 1 is a perspective view of the hydrogen tank 10. In addition, FIG. 2 is a cross-sectional view of the hydrogen tank 10. This hydrogen tank 10 is mounted to a vehicle and stores hydrogen in a liquid state. No particular limitation is imposed on a type of the vehicle to which such a hydrogen tank 10 is mounted. For example, the hydrogen tank 10 is mounted to a fuel cell electric vehicle or a hydrogen engine vehicle. A description will hereinafter be made on the hydrogen tank 10 being mounted to the hydrogen engine vehicle, as an example. In the hydrogen engine vehicle, a direct-injection hydrogen engine that injects high-pressure hydrogen gas into an engine cylinder is mounted.

The hydrogen tank 10 stores hydrogen in a liquid state. A pressure of stored liquid hydrogen is the same as or slightly higher than the atmospheric pressure, and is equal to or lower than 1 MPa, for example. In addition, the hydrogen tank 10 stores liquid hydrogen in a state of being kept at a sufficiently lower temperature than a boiling point (-252.9°C at atmospheric pressure).

As illustrated in FIG. 1, the hydrogen tank 10 is in a sandbag shape, and has a cylindrical trunk section 10a and end plate sections 10b, each of which seals an end of the trunk section 10a in an axial direction. The end plate section 10b has a dome shape that is formed by a curved surface. A collector section 20 that is locally depressed is provided to a bottom portion of the hydrogen tank 10. The collector section 20 is formed by a cylinder, and a dome-shaped portion that seals an end portion of the cylinder. As it is apparent from the description so far, almost all constituent surfaces of the hydrogen tank 10 are curved surfaces. With such a configuration, it is possible to bring distribution of a pressure applied to the hydrogen tank 10 close to uniformity.

A liquid hydrogen fill port 26 and a hydrogen gas return port 28 are attached to a lateral portion of the hydrogen tank 10. The liquid hydrogen fill port 26 is a port that accepts a supply of liquid hydrogen, and communicates with an inner tank 12, which will be described below. The hydrogen gas return port 28 is a port used to suction hydrogen gas (so-called boil-off gas), which is vaporized by natural heat input during the supply of liquid hydrogen, to a supply source side. This hydrogen gas return port 28 also communicates with the inner tank 12.

Furthermore, plural ports including a pump port 24 and a boil-off port 25 are provided on top of the hydrogen tank 10. Here, FIG. 1 only illustrates the pump port 24 and the boil-off port 25, and does not illustrate the other ports. The pump port 24 is a port through which a cylinder of a pump 22 (see FIG. 2) is inserted and which communicates with the inner tank 12. The pump 22 is a booster pump that pressurizes and pumps liquid hydrogen stored in the hydrogen tank 10 in response to a request from the hydrogen engine. The pressure of liquid hydrogen after boosting is 5 MPa to several tens of MPa, for example. High-pressure liquid hydrogen that is pumped by the pump 22 is vaporized and is then directly injected as the high-pressure hydrogen gas into the engine cylinder. That is, in this example, only an amount of hydrogen that is required by the hydrogen engine is pressurized and drawn. With such a configuration, it is possible to suppress the pressure of liquid hydrogen stored in the hydrogen tank 10 to a low value. As a result, it is possible to suppress a maximum allowable pressure of the hydrogen tank 10 to a low value and thus to reduce cost and weight related to the hydrogen tank 10.

In the pump 22, a suction port that suctions liquid hydrogen in the tank is disposed in the collector section 20. With such a configuration, even when a remaining amount of liquid hydrogen in the tank becomes small, it is possible to pump liquid hydrogen by the pump 22.

The boil-off port 25 is a port from which the hydrogen gas, which is produced when liquid hydrogen is vaporized by the natural heat input, that is, the boil-off gas, is released to the outside of the tank. This boil-off port 25 communicates with the inner tank 12. A boil-off valve 29 (see FIG. 2) is connected to the boil-off port 25. The boil-off valve 29 is opened when an internal pressure of the hydrogen tank 10 (more precisely, that of the inner tank 12) becomes equal to or higher than a specified release pressure, so as to release the boil-off gas to the outside of the tank.

As illustrated in FIG. 2, such a hydrogen tank 10 has: the inner tank 12 that stores liquid hydrogen; and an outer tank 14 that accommodates the inner tank 12. The inner tank 12 is made of metal that is not brittle at low temperature, and an example of such metal is stainless steel, particularly, 18-8 stainless steel. As described above, this inner tank 12 is in a sandbag shape and has the collector section 20 in the bottom portion. The inner tank 12 is designed that a maximum allowable pressure thereof is approximately twice to five times the above-described release pressure.

The outer tank 14 has such a shape that the inner tank 12 is offset to the outside. Similar to the inner tank 12, such an outer tank 14 is also made of metal that is not brittle at low temperature, and an example of such metal is stainless steel. A heat-insulation clearance 18 that is a clearance with a predetermined thickness is provided between the outer tank 14 and the inner tank 12. The thickness of this heat-insulation clearance 18 hardly varies from place to place and is substantially constant.

The heat-insulation clearance 18 is partially filled with a heat-insulation material 16, and the heat-insulation clearance 18 is vacuum-suctioned. Accordingly, the heat-insulation clearance 18 has: a vacuum area 17 that is not filled with the heat-insulation material 16; and an area that is filled with the heat-insulation material 16 and where the inner tank 12 is surface-supported by the heat-insulation material 16. The heat-insulation material 16 is a member that inhibits heat transfer from the outside to the inner tank 12 and holds the inner tank 12 to be separated from the outer tank 14. Here, in the present specification, "filling" means a state where the heat-insulation material 16 is arranged in the heat-insulation clearance 18 such that the heat-insulation material 16 is in contact with both of the inner tank 12 and the outer tank 14.

No particular limitation is imposed on a configuration of the heat-insulation material 16 so long as the heat-insulation material 16 exerts sufficient heat insulation performance. In this example, superinsulation 34 is used as the heat-insulation material 16. One or more heat shield layers 30 and one or more spacer layers 32 are stacked to form the superinsulation 34. The heat shield layer 30 is a layer that prevents thermal radiation, and is made of sheet-like metal (such as aluminum). The spacer layer 32 is a layer that prevents the heat transfer, and is made of a fiber material such as glass wool. Such superinsulation 34 has an average thermal conductivity of 1 x 10⁻⁶ cal/sec.cm.°C or lower.

Both the heat-insulation material 16 and the heat-insulation clearance 18 (and thus the vacuum area 17) are vacuum-suctioned. The vacuum suction effectively prevents the heat transfer to the inner tank 12. In this way, liquid hydrogen can be stored at low temperature. A seal-off valve 36 is provided to the outer tank 14. The seal-off valve 36 communicates with a suction pump (not illustrated) during this vacuum suction and is closed after the vacuum suction.

A rupture disc 38 is further attached to the outer tank 14. The rupture disc 38 is ruptured when an internal pressure of the outer tank 14 exceeds a specified allowable pressure, so as to communicate between the heat-insulation clearance 18 and an external space. The provision of such a rupture disc 38 can prevent an excess increase in the internal pressure of the outer tank 14 and thus can secure safety of the hydrogen tank 10 further reliably.

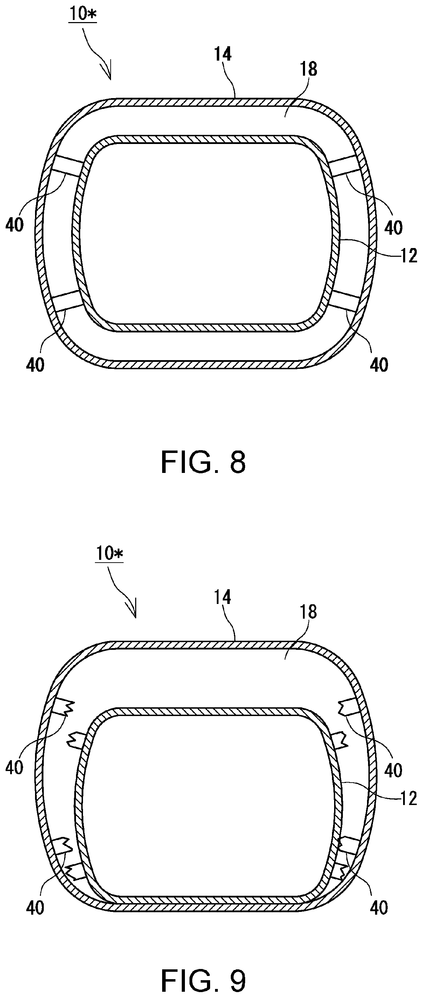

As it has been apparent from the description so far, in this example, the heat-insulation clearance 18, which is the clearance between the inner tank 12 and the outer tank 14, is partially filled with the heat-insulation material 16. A reason for such a configuration will be described in comparison with a comparative example. FIGs. 8 and 9 are schematic views illustrating a hydrogen tank 10* in the comparative example.

As illustrated in FIG. 8, in the hydrogen tank 10* in the comparative example, the inner tank 12 is suspended and held inside the outer tank 14 by a coupling member 40. The coupling member 40 is a member that connects the inner tank 12 and the outer tank 14, and is made of resin, for example. The heat-insulation clearance 18 between the inner tank 12 and the outer tank 14 is not provided with the heat-insulation material 16 but is vacuum-suctioned to have a high heat insulation property. Such a hydrogen tank 10* is mounted to a vehicle. In this case, when the vehicle collides with an obstacle, and a strong impact is applied to the hydrogen tank 10*, as illustrated in FIG. 9, the coupling member 40 is possibly damaged. In such a case, the inner tank 12 possibly collides with the outer tank 14 severely due to a gravitational force or an inertial force, which damages the inner tank 12. When the inner tank 12 is damaged, naturally, stored hydrogen leaks out and causes various problems.

Meanwhile, in this example, the heat-insulation material 16 is partially arranged around the inner tank 12, and a part of an outer surface of the inner tank 12 is in contact with the heat-insulation material 16. This heat-insulation material 16 is thicker than the heat-insulation clearance 18 in a no-load state (that is, a state where a pressure difference between the inside and the outside of the heat-insulation material 16 is almost zero). Thus, the heat-insulation material 16 is in tight contact with both the inner tank 12 and the outer tank 14 and holds the inner tank 12 to be separated from the outer tank 14.

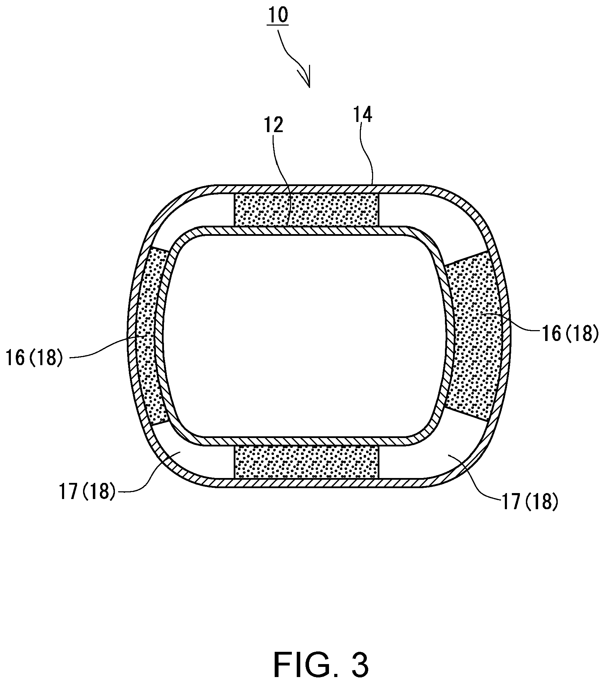

With such a configuration, even when the vehicle collides with the obstacle, the inner tank 12 remains separated from the outer tank 14. Thus, the impact on the inner tank 12 can be reduced. FIG. 3 is a schematic view illustrating a condition of the hydrogen tank 10 during the collision. As illustrated in FIG. 3, according to this example, there is a case where the inner tank 12 moves slightly within the outer tank 14 due to the impact during the collision. However, since the heat-insulation material 16 is interposed between the outer tank 14 and the inner tank 12, the inner tank 12 remains separated from the outer tank 14. Thus, it is possible to effectively prevent the collision between the inner tank 12 and the outer tank 14. As a result, it is possible to further reliably prevent the damage to the inner tank 12 and thus leakage of hydrogen. In other words, according to this example, hydrogen can be stored further stably. In addition, in this example, the vacuum area 17 that is not filled with the heat-insulation material 16 is provided in the heat-insulation clearance 18. In the vacuum area 17, heat is transferred only by radiation. By partially providing such a vacuum area 17, it is possible to keep the heat-insulation property of the inner tank 12 high.

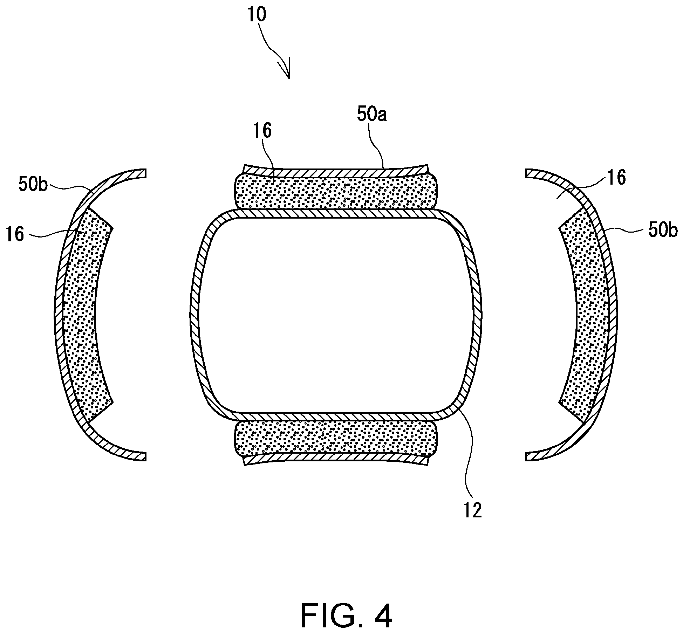

Incidentally, as illustrated in FIG. 4, the outer tank 14 is formed by welding multiple outer tank pieces 50a, 50b. For example, the outer tank 14 is formed by welding a cylindrical trunk section piece 50a and end plate pieces 50b, each of which seals an end of the trunk section piece 50a. When the hydrogen tank 10 is manufactured, the outer tank pieces 50 are arranged around the inner tank 12, the heat-insulation material 16 is arranged between each of these outer tank pieces 50 and the inner tank 12, and the outer tank pieces 50 are welded. Then, when the outer tank 14 can be formed by welding, the heat-insulation clearance 18 is vacuum-suctioned.

Here, as described above, the heat-insulation material 16 is thicker than the heat-insulation clearance 18 in the no-load state. Accordingly, in the case where the heat-insulation material 16 is arranged between the inner tank 12 and the outer tank piece 50 in a manufacturing process of the hydrogen tank 10, as illustrated in FIG. 4, the inner tank 12 or the outer tank piece 50 is pressed and deformed by the heat-insulation material 16, which possibly results in an inappropriate shape of the inner tank 12 or the outer tank 14 in the end. In addition, in a deformed state of the outer tank piece 50, it is difficult to appropriately weld the outer tank pieces 50.

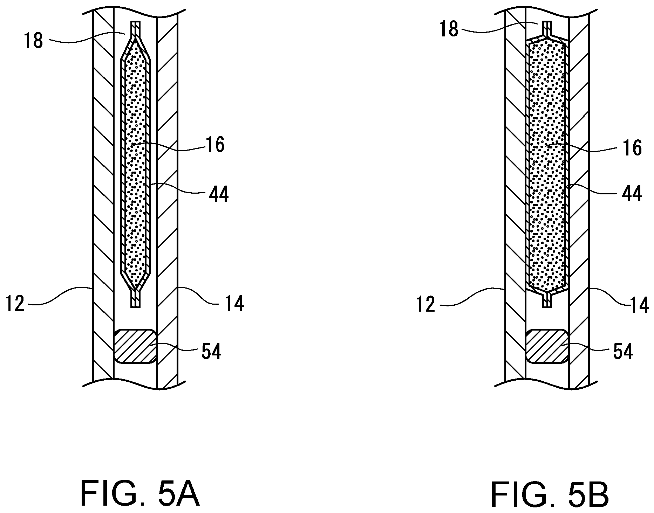

Thus, in this example, when the hydrogen tank 10 is manufactured, the heat-insulation material 16 is accommodated in a sealed bag 44 in advance, and this sealed bag 44 is vacuum-suctioned. A description thereon will be given with reference to FIG. 5A and FIG. 5B. FIG. 5A and FIG. 5B are schematic views, each of which illustrates a manufacturing condition of the hydrogen tank 10.

As illustrated in FIG. 5A, and as described above, the heat-insulation material 16 is accommodated in the sealed bag 44. This sealed bag 44 is vacuum-suctioned in advance. When the hydrogen tank 10 is manufactured, this sealed bag 44 is arranged in the heat-insulation clearance 18 between the inner tank 12 and the outer tank piece 50. At a stage before welding of the outer tank piece 50, the heat-insulation clearance 18 is not yet vacuum-suctioned. Thus, at this time point, the heat-insulation material 16 is pressed and compressed by the atmospheric pressure. As a result, at the stage before welding of the outer tank piece 50, as illustrated in FIG. 5A, the heat-insulation material 16 is sufficiently thinner than the heat-insulation clearance 18. For this reason, even in the case where the heat-insulation material 16 is arranged in the heat-insulation clearance 18, neither the inner tank 12 nor the outer tank piece 50 is deformed by a pressing force from the heat-insulation material 16. At this time, the sealed bag 44 may be temporarily bonded to the inner tank 12 or the outer tank piece 50 so as to prevent movement of the sealed bag 44 within the heat-insulation clearance 18.

Once the heat-insulation material 16 is properly arranged, a worker welds the outer tank pieces 50 together to form the outer tank 14. Then, after the outer tank 14 is formed, the worker vacuum-suctions the heat-insulation clearance 18. As a result, a differential pressure between the inside and the outside of the sealed bag 44 is reduced, which eliminates compression of the heat-insulation material 16. Then, as illustrated in FIG. 5B, the heat-insulation material 16 expands sufficiently and is brought into tight contact with both the inner tank 12 and the outer tank 14. Once being in this state, the inner tank 12 is held to be separated from the outer tank 14 by the heat-insulation material 16.

However, in this case, it is difficult to maintain the thickness of the heat-insulation clearance 18 to be constant at the stage before welding of the outer tank piece 50. Thus, in this case, a spacer 54 (see FIGs. 5A and 5B) may partially be arranged between the inner tank 12 and the outer tank piece 50. No particular limitation is imposed on a configuration of the spacer 54 so long as the thickness of the heat-insulation clearance 18 can be maintained to be constant. Thus, the spacer 54 may be made of the resin or the metal. In addition, the spacer 54 may or may not be bonded to at least one of the inner tank 12 and the outer tank 14. Furthermore, in order to prevent transmission of a concentrated load to a part of the inner tank 12 via the spacer 54 during the collision of the vehicle, the spacer 54 may be configured to be deformed or destroyed relatively easily. For example, the spacer 54 may have a bent section or a vulnerable section to induce buckling.

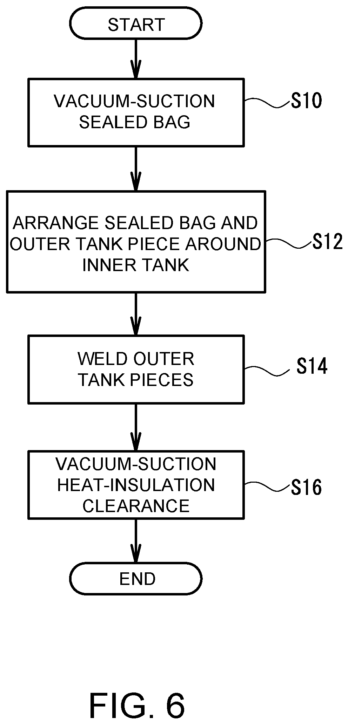

FIG. 6 is a flowchart illustrating a manufacturing flow of the hydrogen tank 10. As illustrated in FIG. 6, and as described above, in the case where the hydrogen tank 10 is manufactured, the worker vacuum-suctions the sealed bag 44, which accommodates the heat-insulation material 16 (S10). Next, the worker arranges the outer tank pieces 50 and the sealed bags 44 around the inner tank 12 (S12). At this time, in order to keep the thickness of the heat-insulation clearance 18 as designed, the spacer 54 may be arranged between the inner tank 12 and the outer tank piece 50.

Next, the worker welds the outer tank pieces 50 together to form the sealed outer tank 14 (S14). Thereafter, the worker connects the seal-off valve 36 to the suction pump (not illustrated) and vacuum-suctions the heat-insulation clearance 18 (S16). As a result, the differential pressure between the inside and the outside of the sealed bag 44 is reduced, causing the heat-insulation material 16 to expand. Thus, the heat-insulation material 16 that has expanded is brought into contact with both of the inner tank 12 and the outer tank 14, and holds the inner tank 12 to be separated from the outer tank 14.

As it is apparent from the description so far, according to this example, the heat-insulation material 16 is provided to hold the inner tank 12 to be separated from the outer tank 14. With such a configuration, even in the case where the vehicle collides with the obstacle, and the strong impact is applied to the hydrogen tank 10, it is possible to effectively prevent the damage to the inner tank 12.

In addition, in this example, the internal pressure on the inner tank 12 can be dispersed and transmitted to the heat-insulation material 16 and the outer tank 14. Therefore, according to this example, it is possible to increase the maximum allowable pressure of the hydrogen tank 10 without thickening the inner tank 12 and the outer tank 14.

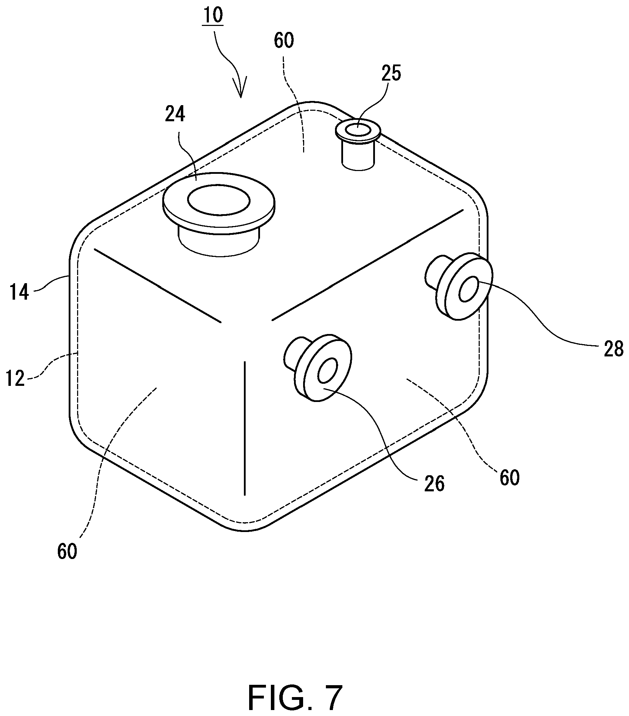

Furthermore, it is possible to improve a degree of freedom in the shape of the inner tank 12 by providing the heat-insulation material 16. More specifically, the inner tank 12 can be shaped to have a flat surface section. For example, as illustrated in FIG. 7, the inner tank 12 may be formed in a substantially cuboid shape that has a plurality of flat surface sections 60. More specifically, in the case where the flat surface section 60 is provided to the inner tank 12 in a structure that the heat-insulation material 16 is not arranged in the heat-insulation clearance 18, the high pressure is applied to the flat surface section 60. In this case, there is a possibility that flat surface section 60 of the inner tank 12 is deformed and contacts the outer tank 14. Then, when the inner tank 12 is partially in contact with the outer tank 14, the heat insulation performance is rapidly degraded, and it becomes difficult to keep liquid hydrogen at low temperature. For this reason, the conventional inner tank 12 does not have the flat surface section 60 but is formed by the curved surface only. In other words, the conventional inner tanks 12 usually have the sandbag shape or a spherical shape.

Meanwhile, in the case where the heat-insulation material 16 is partially provided to the heat-insulation clearance 18 as in this example, the heat-insulation material 16 and the outer tank 14 receive the pressure on the flat surface section 60 even when the flat surface section 60 is provided to the inner tank 12. As a result, it is possible to effectively prevent the deformation of the inner tank 12. In addition, even when the inner tank 12 is deformed, it is possible to effectively prevent the contact of the inner tank 12 with the outer tank 14 and thus to maintain the high heat insulation performance. Therefore, according to this example, it is possible to improve the degree of freedom in the shape of the inner tank 12.

The configuration that has been described so far is merely one example, and the remainder of the configuration may be modified as long so the heat-insulation material 16 is at least partially filled between the inner tank 12 and the outer tank 14. For example, in the above-described description, the heat-insulation material 16 is accommodated in the sealed bag 44. However, the heat-insulation material 16 may directly be arranged in the heat-insulation clearance 18 without being accommodated in the sealed bag 44. In addition, the shape of the hydrogen tank 10 may be modified appropriately, and examples of the shape are the spherical shape, a rugby ball shape, and a rectangular parallelepiped shape. Furthermore, in this example, the booster pump 22 is provided to the hydrogen tank 10.

## Claims

1. An in-vehicle liquid hydrogen tank (10) comprising:
an inner tank (12) that stores liquid hydrogen;
an outer tank (14) that accommodates the inner tank (12); and
a heat-insulation material (16) that is disposed in a heat-insulation clearance (18) as a clearance between the inner tank (12) and the outer tank (14) and holds the inner tank (12) to be separated from an inner surface of the outer tank (14), wherein
the heat-insulation clearance (18) has: a vacuum area that is not filled with the heat-insulation material (16); and an area that is filled with the heat-insulation material (16) and thus allows the inner tank (12) to be surface-supported by the heat-insulation material (16);
**characterized by** the in-vehicle liquid hydrogen tank (10) further comprising:
a booster pump (22) that pressurizes liquid hydrogen stored in the inner tank (12) and outputs pressurized liquid hydrogen to the outside, wherein
a bottom portion of the inner tank (12) is formed with a collector section (20) which is depressed downward and in which a lower end of the booster pump (22) is inserted.

2. The in-vehicle liquid hydrogen tank (10) according to claim 1, wherein
the heat-insulation material (16) includes superinsulation (34) that is formed by stacking one or more heat shield layers (30), each of which is made of a metal sheet, and one or more spacer layers (32), each of which is made of a fiber material, and
the heat-insulation clearance (18) is vacuum-suctioned in a state where the heat-insulation material (16) is arranged therein.

3. The in-vehicle liquid hydrogen tank (10) according to claim 2, wherein
the heat-insulation material (16) is accommodated in a sealed bag (44), and
both the inside of the sealed bag (44) and the heat-insulation clearance (18) are vacuum-suctioned.

4. The in-vehicle liquid hydrogen tank (10) according to any one of claims 1 to 3, wherein
the outer tank (14) has a rupture disc (38) that is ruptured when an internal pressure of the outer tank (14) becomes equal to or higher than a specified allowable pressure, so as to expose inside of the outer tank (14) to atmospheric air.

5. The in-vehicle liquid hydrogen tank (10) according to any one of claims 1 to 4, wherein
the inner tank (12) is shaped to have a flat surface section (60).

6. A method for manufacturing the in-vehicle liquid hydrogen tank (10) of any preceding claim, comprising:
accommodating a heat-insulation material (16), which includes a fiber material, in a sealed bag (44) and then vacuum-suctioning inside of the sealed bag (44); and
arranging, in an outer tank (14), an inner tank (12) that stores liquid hydrogen, arranging the sealed bag (44) in a heat-insulation clearance (18) as a clearance between the inner tank (12) and the outer tank (14), and thereafter vacuum-suctioning the heat-insulation clearance (18).

## Patentansprüche

1. Fahrzeuginterne Flüssigwasserstofftank (10), umfassend:
einen Innentank (12), der flüssigen Wasserstoff lagert;
einen Außentank (14), der den Innentank (12) aufnimmt; und
ein Wärmedämmmaterial (16), das in einem Wärmedämmzwischenraum (18) als Zwischenraum zwischen dem Innentank (12) und dem Außentank (14) angeordnet ist und den Innentank (12) hält, um von einer Innenoberfläche des Außentanks (14) getrennt zu sein, wobei
der Wärmedämmzwischenraum (18) aufweist: einen Vakuumbereich, der nicht mit dem Wärmedämmmaterial (16) gefüllt ist; und einen Bereich, der mit dem Wärmedämmmaterial (16) gefüllt ist und somit ermöglicht, dass der Innentank (12) von dem Wärmedämmmaterial (16) oberflächengestützt wird;
**dadurch gekennzeichnet, dass** der fahrzeuginterne Flüssigwasserstofftank (10) ferner umfasst:
eine Druckerhöhungspumpe (22), die den in dem Innentank (12) gelagerten Flüssigwasserstoff unter Druck setzt und unter Druck stehenden Flüssigwasserstoff nach außen abgibt, wobei
ein unterer Abschnitt des Innentanks (12) mit einem Sammlerabschnitt (20) ausgebildet ist, der nach unten gedrückt ist und in den ein unteres Ende der Druckerhöhungspumpe (22) eingesetzt ist.

2. Fahrzeuginterner Flüssigwasserstofftank (10) nach Anspruch 1, wobei
das Wärmedämmmaterial (16) eine Superisolierung (34) beinhaltet, die durch Stapeln einer oder mehrerer Hitzeschutzschichten (30), die jeweils aus einem Metallblech bestehen, und einer oder mehrerer Abstandshalterschichten (32), die jeweils aus einem Fasermaterial bestehen, ausgebildet wird, und
der Wärmedämmzwischenraum (18) in einem Zustand, in dem das Wärmedämmmaterial (16) darin angeordnet ist, durch Vakuum abgesaugt wird.

3. Fahrzeuginterner Flüssigwasserstofftank (10) nach Anspruch 2, wobei
das Wärmedämmmaterial (16) in einem versiegelten Beutel (44) aufgenommen wird und
sowohl das Innere des versiegelten Beutels (44) als auch der Wärmedämmungszwischenraum (18) durch Vakuum abgesaugt werden.

4. Fahrzeuginterner Flüssigwasserstofftank (10) nach einem der Ansprüche 1 bis 3, wobei
der Außentank (14) eine Berstscheibe (38) aufweist, die bricht, wenn ein Innendruck des Außentanks (14) gleich oder höher als ein spezifizierter zulässiger Druck wird, um das Innere des Außentanks (14) der atmosphärischen Luft auszusetzen.

5. Fahrzeuginterner Flüssigwasserstofftank (10) nach einem der Ansprüche 1 bis 4, wobei
der Innentank (12) geformt ist, um einen ebenen Oberflächenabschnitt (60) aufzuweisen.

6. Verfahren zum Herstellen des fahrzeuginternen Flüssigwasserstofftanks (10) nach einem der vorhergehenden Ansprüche, umfassend:
Aufnehmen eines Wärmedämmmaterials (16), das ein Fasermaterial beinhaltet, in einem versiegelten Beutel (44) und anschließendes Absaugen durch Vakuum des Inneren des versiegelten Beutels (44); und
Anordnen eines Innentanks (12), der flüssigen Wasserstoff lagert, in einem Außentank (14), Anordnen des versiegelten Beutels (44) in einem Wärmedämmzwischenraum (18) als Zwischenraum zwischen dem Innentank (12) und dem Außentank (14) und anschließendes Absaugen durch Vakuum des Wärmedämmzwischenraums (18).

## Revendications

1. Réservoir d'hydrogène liquide embarqué (10) comprenant :
un réservoir intérieur (12) qui renferme de l'hydrogène liquide,
un réservoir extérieur (14) qui loge le réservoir intérieur (12), et
un matériau d'isolation thermique (16) qui est agencé dans un espace d'isolation thermique (18) constitué par l'espace entre le réservoir intérieur (12) et le réservoir extérieur (14) et qui maintient le réservoir intérieur (12) séparé d'une surface intérieure du réservoir extérieur (14) ;
l'espace d'isolation thermique (18) comprenant : une zone de dépression qui n'est pas remplie par le matériau d'isolation thermique (16), et une zone qui est remplie par le matériau d'isolation thermique (16) et permet ainsi au réservoir intérieur (12) d'être supporté en surface par le matériau d'isolation thermique (16) ;
**caractérisé en ce que** le réservoir d'hydrogène liquide embarqué (10) comprend en outre :
une pompe de surpression (22) qui met l'hydrogène liquide renfermé par le réservoir intérieur (12) sous pression et refoule de l'hydrogène liquide sous pression vers l'extérieur ;
une partie inférieure du réservoir intérieur (12) étant conçue avec une section de collecte (20) qui est renfoncée vers le bas et dans laquelle une extrémité inférieure de la pompe de surpression (22) est insérée.

2. Réservoir d'hydrogène liquide embarqué (10) selon la revendication 1, dans lequel
le matériau d'isolation thermique (16) comprend une superisolation (34) qui est formée par empilement d'une ou plusieurs couches d'écran thermique (30), chacune d'entre elles étant constituée d'une feuille métallique, et d'une ou plusieurs couches d'espacement (32), chacune d'entre elles étant constituée d'un matériau fibreux, et
l'espace d'isolation thermique (18) est mis sous dépression dans un état où le matériau d'isolation thermique (16) y est disposé.

3. Réservoir d'hydrogène liquide embarqué (10) selon la revendication 2, dans lequel
le matériau d'isolation thermique (16) est logé dans un sac hermétique (44), et
l'intérieur du sac hermétique (44) et l'espace d'isolation thermique (18) sont tous deux mis sous dépression.

4. Réservoir d'hydrogène liquide embarqué (10) selon l'une quelconque des revendications 1 à 3, dans lequel
le réservoir extérieur (14) comporte un disque de rupture (38) qui se rompt lorsque la pression interne du réservoir extérieur (14) atteint ou dépasse une pression admissible spécifique, de manière à exposer l'intérieur du réservoir extérieur (14) à l'air atmosphérique.

5. Réservoir d'hydrogène liquide embarqué (10) selon l'une quelconque des revendications 1 à 4, dans lequel
le réservoir intérieur (12) est conçu pour avoir une section de surface plane (60).

6. Procédé de fabrication du réservoir d'hydrogène liquide embarqué (10) selon l'une quelconque des revendications précédentes, comprenant les étapes consistant à :
loger un matériau d'isolation thermique (16), qui comprend un matériau fibreux, dans un sac hermétique (44), puis mettre sous dépression l'intérieur du sac hermétique (44), et
disposer, dans un réservoir extérieur (14), un réservoir intérieur (12) qui renferme de l'hydrogène liquide, disposer le sac hermétique (44) dans un espace d'isolation thermique (18) constitué par l'espace entre le réservoir intérieur (12) et le réservoir extérieur (14), puis mettre sous dépression l'espace d'isolation thermique (18).
